# EUROPÄISCHE PATENTSCHRIFT

(11) **EP 1 424 001 B1**
(45) Veröffentlichungstag und Bekanntmachung des Hinweises auf die Patenterteilung: **21.06.2006**
(21) Anmeldenummer: 03025588.9
(22) Anmeldetag: 08.11.2003
(51) Int. Cl.: A01F 15/10, A01D 90/04

(54) **Ballenpresse**
Baling press
Presse à balles

(30) Priorität: 27.11.2002 DE 10255175
(43) Veröffentlichungstag der Anmeldung: 02.06.2004
(73) Patentinhaber: DEERE & COMPANY, Moline, Illinois 61265-8098 (US)
(72) Erfinder: Viaud, Jean, 70100 Gray (FR)
(74) Vertreter: Magin, Ludwig Bernhard

(56) Entgegenhaltungen:
- EP-A- 0 815 720
- DE-A- 3 407 355
- DE-A- 19 806 630
- DE-U- 20 112 345

## Beschreibung

Die Erfindung betrifft eine Ballenpresse mit in Flussrichtung aufeinander folgenden Aufnehmer, Gutbehandlungsvorrichtung und Querförderer.

Bekannte Rundballenpressen und Quaderballenpressen erhalten das zu pressende Gut von einem Aufnehmer großer Breite, der es einer Querfördervorrichtung, z. B. einer Schnecke aufgibt, die es wiederum wahlweise in eine Schneidvorrichtung weiterleitet, von wo es in einen Pressraum gelangt, siehe z. B. DE 198 06 630.

Das der Erfindung zugrundeliegende Problem wird darin gesehen, dass das zusammengeführte und verdichtete Pressgut in der Schneidvorrichtung Verstopfungen hervorrufen kann.

Dieses Problem wird in erfinderischer Weise durch die Lehre von Patentanspruch 1 gelöst, wobei in den davon abhängigen Patentansprüchen jeweils vorteilhafte Weiterentwicklungen gelehrt werden.

Auf diese Weise wird der von der Gutbehandlungsvorrichtung zu bewältigende Gutstrom gleichmäßig und in relativ dünner Matte von dem Aufnehmer angenommen und kann störungsfrei weitergegeben werden. Sobald das Gut behandelt, z. B. geschnitten, befeuchtet, aufbereitet oder dergleichen ist und sicher in einer Matte erfasst ist, kann es ohne größere Probleme an den Querförderer weitergegeben werden, der es unmittelbar in den Pressraum oder eine Vorpresskammer weiter leitet.

Es ist zwar auch bereits bekannt (DE-34 07 355), einen Aufnehmer, eine Schneidvorrichtung und einen Querförderer in gleicher Breite vorzusehen; dort geschieht dies jedoch an einem Feldhäcksler, in dem das so zusammengeführte Gut von einem Paddelförderer abgenommen und weitergeleitet wird. Bis zur Verdichtung des Ernteguts in einem Silo oder Wagen sind folglich weitere Komponenten einbezogen, die zusätzliche Herstellungskosten hervorrufen.

Bei einer Rundballenpresse kann der Querförderer als Rotationskörper am Umfang des Ballenpressraums die Drehung des Ballens unterstützen, was insbesondere bei einer Rundballenpresse mit einem größenveränderlichen Pressraum hilfreich ist.

Da eine Ballenpresse, unabhängig davon, ob es sich um eine Quaderballenpresse oder um eine Rundballenpresse handelt, deren Aufnahmebreite die Breite des Pressraums übersteigt, einen Querförderer benötigt, nicht aber unbedingt einen Zwischenförderer, hat eine vorbereitete Schnittstelle den Vorteil, dass herstellerseitig nur ein Grundmodell einer Presse zur Verfügung gestellt werden muss, an das wahlweise ein Aufnehmer oder ein Aufnehmer mit einer Fördervorrichtung angeschlossen wird.

Zwar kann ein Querförderer auf vielfältige Weise ausgebildet werden, z. B. mit um im Wesentlichen vertikale Achse drehenden Rotoren; es ist aber einfacher und kostengünstiger, Schnecken oder Stummelschnecken zu verwenden, die in der Richtung des Gutflusses ausgerichtet sind. Diese Ausrichtung entspricht auch der des Aufnehmers und der Fördervorrichtung, so dass der Antrieb über in einer Ebene gelegene Zahnräder, Kettenräder, Riemenscheiben etc. erfolgen kann.

Wenn der über den Pressraum hinausragende Teil des Querförderers, z.B. die Schnecken, nicht auf derselben Achse wie der Rest des Querförderers, sondern um eine zu diesem versetzten Achse drehbar gelagert ist, kann die Zufuhr in den Pressraum besser an die technischen und räumlichen Gegebenheiten angepasst werden.

Dadurch, dass die überstehenden Abschnitte - bzw. wenn sich der Überstand nur auf einer Seite befindet - dieser Abschnitt, langsamer oder schneller als der Rest angetrieben werden, kann der Gutfluss zu dem Pressraum verbessert werden.

Ein oberschlächtiger oder unterschlächtiger Antrieb des Querförderers wird bei einer Rundballenpresse nach dem Drehsinn des Rundballens gewählt und zwar derart, dass die Einspeisung des Pressguts in den Pressgut möglichst störungsfrei erfolgt. Die Wahl, ob oberschlächtig oder unterschlächtig gedreht wird, richtet sich bei der Fördervorrichtung danach, ob eine Gutverdichtung während des Transports erwünscht ist oder nicht.

Wenn die Schnittstelle zwischen dem Aufnehmer bzw. der Fördervorrichtung und dem Querförderer vertikal schwenkbar ausgebildet ist, kann der Querförderer stets an derselben Stelle verharren, während sich der Aufnehmer und gegebenenfalls die Fördervorrichtung an die Bodenunebenheiten anpassen. Danach bleibt das Zuführverhalten des Querförderers zu dem Pressraum konstant und kann optimiert werden.

Mitnehmer auf dem dem Pressraum zugewandten Abschnitt des Querförderers haben den Vorteil, dass sie die Förderung des Pressguts in den Pressraum, aber eventuell auch die Drehung eines Rundballens in einer Rundballenpresse aktiv unterstützen. Diese Mitnehmer können als Leisten, Finger, Zinken, Stege etc. ausgebildet sein, die starr oder sich zurückziehend und hervortretend in bzw. auf einem Rotor angeordnet sind.

Insbesondere die Ausbildung der Gutbehandlungsvorrichtung als Schneidvorrichtung, Quetschvorrichtung, Befeuchtungsvorrichtung oder Analysevorrichtung erbringt wesentliche Vorteile, weil dort eine dünne gleichmäßige Matte wesentlich zu dem Erfolg des Schnitts, der Bedampfung bei trockener Luzerne, Quetschung von geschlossenen Stängeln zum Beschleunigen des Trocknungsprozesses oder Messung des Gutzustands bzw. - inhalts beiträgt.

Wenn die Fördervorrichtung als Schneidvorrichtung ausgebildet ist und deren Messer wahlweise in eine Außerbetriebsstellung gebracht werden können, ist es möglich, das Pressgut sowohl geschnitten als auch ungeschnitten, oder nur teilweise geschnitten dem Pressraum zuzuführen.

In der Zeichnung ist ein nachfolgend näher beschriebenes Ausführungsbeispiel der Erfindung offenbart. Es zeigt:
- Figur 1: eine erfindungsgemäße Ballenpresse in Seitenansicht und schematischer Darstellung mit einem oberschlächtig wirkenden Querförderer,
- Figur 2: die Ballenpresse nach Figur 1 in Draufsicht,

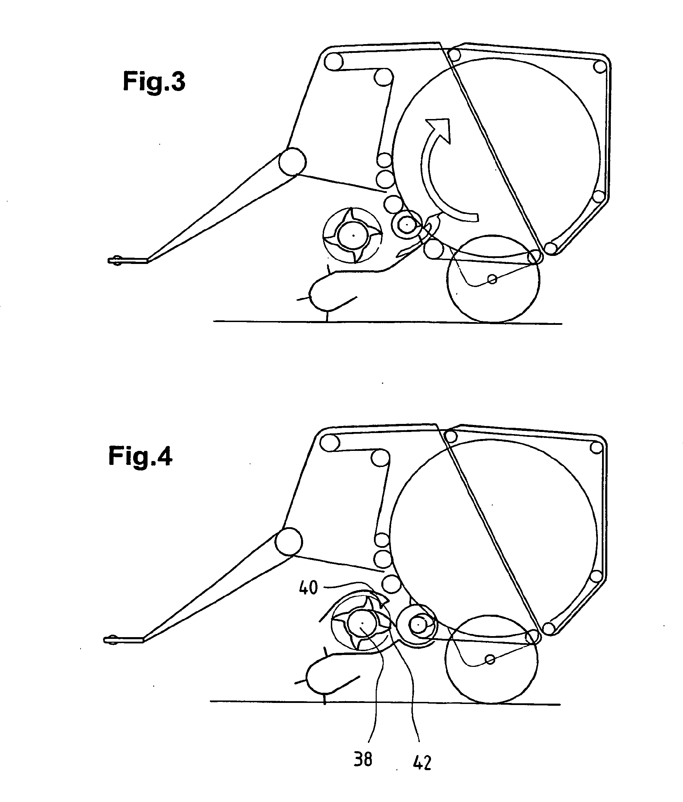

- Figur 3: eine erfindungsgemäße Ballenpresse nach einem zweiten Ausführungsbeispiel in Seitenansicht mit einem unterschlächtig fördernden Querförderer,
- Figur 4: eine erfindungsgemäße Ballenpresse nach einem dritten Ausführungsbeispiel in Seitenansicht mit einer oberschlächtig fördernden Gutbehandlungsvorrichtung,
- Figur 5: die Ballenpresse nach Figur 4 in Draufsicht, und
- Figur 6: eine erfindungsgemäße Ballenpresse nach einem dritten Ausführungsbeispiel in Seitenansicht mit einem oberschlächtig fördernden Querförderer und einer wahlweise verwendeten unterschlächtig fördernden Gutbehandlungsvorrichtung.

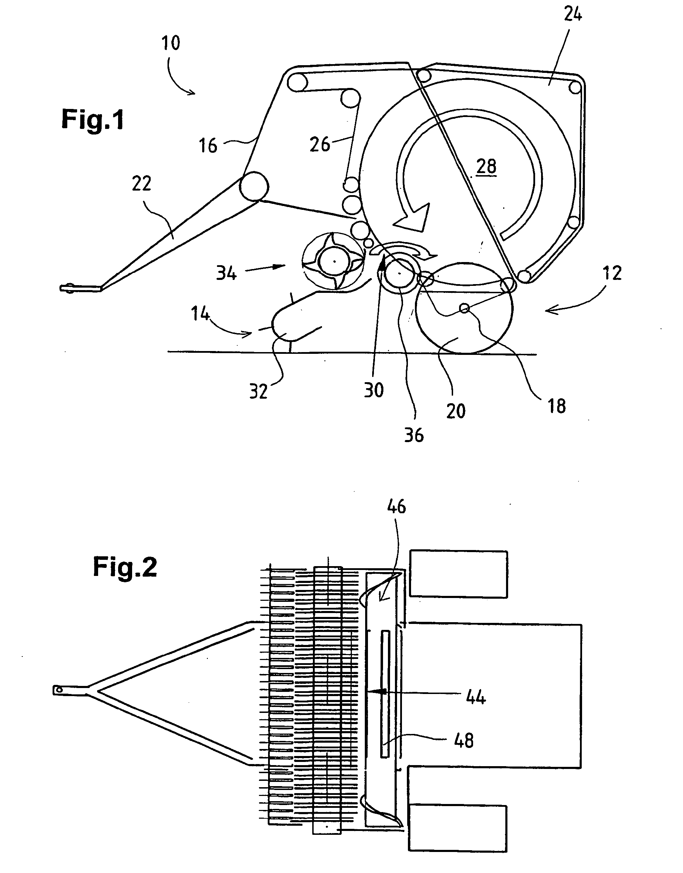

Figur 1 zeigt eine Ballenpresse 10 mit einem Fahrgestell 12 und einem Zuführzusammenbau 14.

Die in der Zeichnung dargestellte Ballenpresse 10 ist als eine Rundballenpresse ausgebildet, was jedoch nicht zwingend ist; vielmehr kann sie auch als eine Quaderballenpresse ausgebildet sein und Großballen erzeugen. Die Presse 10 wird auf dem Feld eingesetzt und nimmt in breiten Schwaden abgelegtes Gut vom Boden auf, um es einem Pressvorgang zu unterwerfen. Im Falle einer Rundballenpresse kommt sowohl eine Bauweise mit fester wie auch mit variabler Größe eines Pressraums infrage.

Das Fahrgestell 12 enthält einen Rahmen 16, eine Achse 18 mit Rädern 20, eine Deichsel 22, Seitenwände 24 und eine Pressvorrichtung 26.

Der Rahmen 16 besteht aus den hauptsächlichen zusammengeschraubten oder geschweißten Teilen, die die zuvor genannten Komponenten tragen.

Die Achse 18 stellt die Verbindung zwischen den Räder 20 und dem Rahmen 16 her und kann federnd wie auch starr angebracht bzw. ausgebildet sein.

Die Räder 20 stützen den Rahmen 16 beweglich auf dem Boden ab, so dass dieser infolge seiner Verbindung mit einem Zugfahrzeug über die Deichsel 22 über das Feld gezogen werden kann.

Die Seitenwände 24 sind um die Breite eines zwischen ihnen gebildeten Pressraums 28 voneinander entfernt und bilden dessen seitliche, stirnseitige Begrenzung.

Die Pressvorrichtung 26 kann aus Riemen, Rollen, Stabketten oder dergleichen bestehen und dient dazu, das in den Pressraum 28 geführte Pressgut aufzunehmen und zu verdichten. Im Falle einer Quaderballenpresse würde die Pressvorrichtung 26 von einem in einem Gehäuse geführten Kolben gebildet. Am vorderen unteren Endbereich der Pressvorrichtung 26 ist ein Einlass 30 in den Pressraum 28 vorgesehen. Bei einer Quaderballenpresse könnte der Einlass 30 in den Pressraum 28 von einem vorgeschalteten und vorverdichtenden Vorverdichtungsmechanismus gebildet werden.

Der Zuführzusammenbau 14 fasst die Komponenten zusammen, die sich stromaufwärts des Einlasses 30 befinden, nämlich den Aufnehmer 32, grundsätzlich die Gutbehandlungsvorrichtung 34 und den Querförderer 36. Diese Komponenten sind wenigstens im Wesentlichen gleich breit und bemerkenswert breiter ausgebildet als der Pressraum 28.

Der Aufnehmer 32 wird allgemein als Pick-Up bezeichnet und weist Zinken oder dergleichen auf, die das Pressgut vom Boden anheben und nach hinten zu der Gutbehandlungsvorrichtung 34 abgeben.

Die Fördervorrichtung 34 weist einen Rotor 38 auf und kann sowohl rein fördernd als auch schneidend ausgebildet werden. Im letzten Fall sind Messer 40 und Abstreifer 42 vorgesehen, die in den Umfangskreis des Rotors 38 eingreifen. Die Messer 40 können einzeln oder gemeinsam gegebenenfalls in verschiedene Schneidstellungen und in eine Außerbetriebsstellung gebracht werden. Wenn die Fördervorrichtung 34 vorhanden ist, bildet sie eine bauliche Einheit mit dem Aufnehmer 32 und kann mit diesem gesteuert oder ungesteuert in der Höhe eingestellt werden. Der Antrieb des Rotors 38 kann sowohl unter- als auch oberschlächtig ausgebildet werden, wobei die Lage der Messer 40 und der Abstreifer 42 entsprechend angepasst werden muss.

An der stromabwärts gelegenen Seite des Aufnehmers 32 oder der Fördervorrichtung 34 ist eine nicht näher beschriebene Schnittstelle gebildet, die z.B. Flansche, Haken, Schnappverschlüsse oder dergleichen aufweisen kann.

Der Querförderer 36 setzt sich zumindest strukturell aus einem dem Pressraum 28 zugeordneten, normalerweise mittigen und tangential wirkenden ersten Abschnitt 44 und wenigstens einem davon seitlich angeordneten axial wirkenden, quer fördernden zweiten Abschnitt 46 zusammen. Wenn der Aufnehmer 32 und die Fördervorrichtung 34 auf beiden Seiten des Pressraums 28 bzw. über die Seitenwände 24 überstehen, sind zwei zweite Abschnitte 46 vorhanden.

Der erste Abschnitt 44 ragt in oder an den Umfangsbereich des Pressraums 28 hinein bzw. heran und wirkt dort auf das zu pressende Gut ein, z. B. indem er einen Rundballen bei seiner Drehbewegung unterstützt. Hierzu ist der erste Abschnitt 44 vorzugsweise mit Mitnehmern 48 versehen, deren Art und Aggressivität an das Pressgut und die Pressverhältnisse angepasst ist; normalerweise handelt es sich um axial verlaufende auf die Umfangsfläche aufgeschraubte Leisten oder Stege. Dieser erste Abschnitt entspricht mehr oder weniger der Breite des Pressraums 28 und ist richtungs- und drehzahlmäßig entsprechend angetrieben.

Der bzw. die zweiten Abschnitte 46 können auf einer Achse und drehfest mit dem ersten Abschnitt 44 angeordnet sein, oder von diesem losgelöst versetzt und/oder separat angetrieben werden. Als hervorragende Ausgestaltung hat sich die in der Form von Schnecken herausgestellt. Der bzw. die zweiten Abschnitte 46 können ebenfalls unter- oder oberschlächtig wirkend ausgebildet werden, was davon abhängt, ob das Pressgut einer Verdichtung unterworfen werden kann oder nicht und in welcher Richtung ein Rundballen dreht. Im Falle einer Quaderballenpresse kann die räumliche Zuordnung zu einem Vorpresskanal den Ausschlag für die ober- oder unterschlächtige Förderung geben.

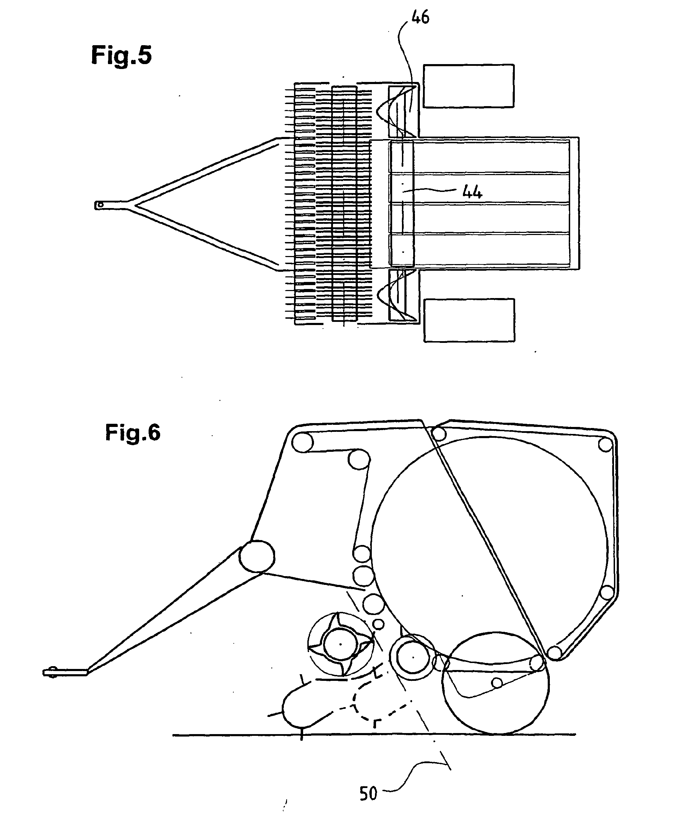

Gemäß Figur 6 kann stromaufwärts des Querförderers 36 einmal nur der Aufnehmer 34 - siehe unterbrochene Linien - oder ein Aufnehmer 34 mit einer Fördervorrichtung 38 verwendet werden, die an einer Schnittstelle 50 zusammengefügt werden, z. B. zusammengeschraubt, ineinander gesteckt etc. Auf diese Weise kann eine Presse 10 in einer Grundversion hergestellt werden, die mit nur einem Aufnehmer 34 für den Einsatz in Stroh oder Heu und mit dem Aufnehmer 34 und der Fördervorrichtung 36 für den Einsatz in Silage hergerüstet wird. Derweil bleibt der Querförderer 36 stets an dem Pressraum 28, so dass dessen Zufuhrcharakteristik nicht verändert wird.

## Patentansprüche

1. Ballenpresse (10), insbesondere Rundballenpresse oder Quaderballenpresse, mit in Flussrichtung aufeinander folgendem Aufnehmer (32), Gutbehandlungsvorrichtung (34) und Querförderer (36), die im Wesentlichen gleich breit sind und die Breite eines mittel- oder unmittelbaren Einlasses (30) für einen Pressraum (28) überschreiten.

2. Ballenpresse nach Anspruch 1, **dadurch gekennzeichnet, dass** sich ein Abschnitt (44) des Querförderers (36) an der Unterseite des Pressraums (28) erstreckt.

3. Ballenpresse nach Anspruch 1 oder 2, **dadurch gekennzeichnet, dass** zwischen der Gutbehandlungsvorrichtung (34) und dem Querförderer (36) eine vorbereitete mechanische Schnittstelle (50) vorgesehen ist.

4. Ballenpresse nach einem oder mehreren der vorherigen Ansprüche, **dadurch gekennzeichnet, dass** der Querförderer (36) in dem über den Pressraum (28) überstehenden Abschnitt (46) als Schnecke ausgebildet ist.

5. Ballenpresse nach einem oder mehreren der vorherigen Ansprüche, **dadurch gekennzeichnet, dass** der über den Pressraum (28) überstehende Abschnitt (46) des Querförderers (36) achsparallel zu dem sich mit dem Pressraum (28) deckenden Abschnitt (44) angeordnet ist.

6. Ballenpresse nach einem oder mehreren der vorherigen Ansprüche, **dadurch gekennzeichnet, dass** der über den Pressraum (28) überstehende Abschnitt (46) des Querförderers (36) und der sich mit dem Pressraum (28) deckende Abschnitt (44) unterschiedlich antreibbar sind.

7. Ballenpresse nach einem oder mehreren der vorherigen Ansprüche, **dadurch gekennzeichnet, dass** die Gutbehandlungsvorrichtung (34) und/oder der Querförderer (36) unterschlächtig oder oberschlächtig antreibbar ist.

8. Ballenpresse nach einem oder mehreren der vorherigen Ansprüche, **dadurch gekennzeichnet, dass** die Schnittstelle (50) stromaufwärts des Querförderers (36) vertikal schwenkbar ausgebildet ist.

9. Ballenpresse nach einem oder mehreren der vorherigen Ansprüche, **dadurch gekennzeichnet, dass** der dem Einlass (30) zugeordnete Abschnitt (44) des Querförderers (36) umfangsseitig mit Mitnehmern (48) versehen ist.

10. Ballenpresse nach einem oder mehreren der vorherigen Ansprüche, **dadurch gekennzeichnet, dass** die Gutbehandlungsvorrichtung (34) als Schneidvorrichtung, Quetschvorrichtung, Befeuchtungsvorrichtung oder Analysevorrichtung ausgebildet ist.

11. Ballenpresse nach einem oder mehreren der vorherigen Ansprüche, **dadurch gekennzeichnet, dass** die Gutbehandlungsvorrichtung (34) im Falle einer Schneidvorrichtung Messer (40) aufweist, die in eine Außerbetriebsstellung bringbar sind.

## Claims

1. Baling press (10), especially a round or rectangular baling press, comprising the following, succeeding one another in the direction of flow: a crop take-up device (32), a crop processing arrangement (34) and a transverse conveyor (36) which are substantially identical in width and which exceed the width of a direct or indirect inlet (30) for a baling chamber (28).

2. Baling press according to claim 1, **characterised in that** a section (44) of the transverse conveyor (36) extends along the underside of the baling chamber (28).

3. Baling press according to claim 1 or 2, **characterised in that** a prepared mechanical interface (50) is provided between the crop processing arrangement (34) and the transverse conveyor (36).

4. Baling press according to one or more of the preceding claims, **characterised in that** the transverse conveyor (36) is in the form of a screw conveyor in the section (46) which projects over the baling chamber (28).

5. Baling press according to one or more of the preceding claims, **characterised in that** the section (46) of the transverse conveyor (36) which projects over the baling chamber (28) is arranged axially parallel to the section (44) which coincides with the baling chamber (28).

6. Baling press according to one or more of the preceding claims, **characterised in that** the section (46) of the transverse conveyor (36) which protrudes over the baling chamber (28) and the section (44) which coincides with the baling chamber (28) may be driven differently.

7. Baling press according to one or more of the preceding claims, **characterised in that** the crop processing arrangement (34) and/or the transverse conveyor (36) may be driven in an undershot or an overshot manner.

8. Baling press according to one or more of the preceding claims, **characterised in that** the interface (50) is designed to be vertically pivotable upstream of the transverse conveyor (36).

9. Baling press according to one or more of the preceding claims, **characterised in that** the section (44) of the transverse conveyor (36) which is associated with the inlet (30) is provided with catches (48) on its circumference.

10. Baling press according to one or more of the preceding claims, **characterised in that** the crop processing arrangement (34) is configured as a cutting device, squeezing device, moisturising device or analysing device.

11. Baling press according to one or more of the preceding claims, **characterised in that**, when the crop processing arrangement (34) is a cutting device, it has blades (40) which may be brought into a non-operating position.

## Revendications

1. Presse à balles (10), en particulier presse à balles rondes ou presse à balles parallélépipédiques, comportant un ramasseur (32), un dispositif de traitement des végétaux (34) et un convoyeur transversal (36), qui sont disposés l'un à la suite de l'autre dans la direction du flux et qui ont sensiblement la même largeur et dépassent la largeur d'une ouverture d'admission (30) directe ou indirecte pour une chambre de compactage (28).

2. Presse à balles selon la revendication 1, **caractérisée en ce qu'**un tronçon (44) du convoyeur transversal (36) s'étend sur le côté inférieur de la chambre de compactage (28).

3. Presse à balles selon la revendication 1 ou 2, **caractérisée en ce qu'**il est prévu une interface mécanique (50) préparée entre le dispositif de traitement des végétaux (34) et le convoyeur transversal (36).

4. Presse à balles selon une ou plusieurs des revendications précédentes, **caractérisée en ce que** le convoyeur transversal (36) est conçu sous forme de vis de transport dans le tronçon (46) en saillie au-dessus de la chambre de compactage (28).

5. Presse à balles selon une ou plusieurs des revendications précédentes, **caractérisée en ce que** le tronçon (46) du convoyeur transversal (36) en saillie au-dessus de la chambre de compactage (28) est agencé parallèlement à l'axe du tronçon (44) coïncidant avec la chambre de compactage (28).

6. Presse à balles selon une ou plusieurs des revendications précédentes, **caractérisée en ce que** le tronçon (46) du convoyeur transversal (36) en saillie au-dessus de la chambre de compactage (28) et le tronçon (44) coïncidant avec la chambre de compactage (28) peuvent être entraînés différemment l'un de l'autre.

7. Presse à balles selon une ou plusieurs des revendications précédentes, **caractérisée en ce que** le dispositif de traitement des végétaux (34) et/ou le convoyeur transversal (36) peuvent être entraînés par en dessous ou en dessus.

8. Presse à balles selon une ou plusieurs des revendications précédentes, **caractérisée en ce que** l'interface (50) est réalisée de manière pivotante dans le sens vertical en amont du convoyeur transversal (36).

9. Presse à balles selon une ou plusieurs des revendications précédentes, **caractérisée en ce que** le tronçon (44) du convoyeur transversal (36), associé à l'ouverture d'admission (30), est muni de taquets d'entraînement (48) sur sa périphérie.

10. Presse à balles selon une ou plusieurs des revendications précédentes, **caractérisée en ce que** le dispositif de traitement des végétaux (34) est réalisé sous forme de dispositif de coupe, de dispositif de broyage, de dispositif d'humidification ou de dispositif d'analyse.

11. Presse à balles selon une ou plusieurs des revendications précédentes, **caractérisée en ce qu'**au cas où le dispositif de traitement des végétaux (34) est conçu sous forme de dispositif de coupe, il comporte des lames de coupe (40) qui peuvent être amenées dans une position hors service.
